# EUROPÄISCHE PATENTSCHRIFT

(11) **EP 3 468 905 B1**
(45) Veröffentlichungstag und Bekanntmachung des Hinweises auf die Patenterteilung: **18.03.2020**
(21) Anmeldenummer: 17727267.1
(22) Anmeldetag: 07.06.2017
(51) Int. Cl.: B66B 1/34, H04L 12/40

(54) **PERSONENTRANSPORTANLAGE MIT ZENTRALER STEUEREINHEIT UND MEHREREN FELDGERÄTEN, WELCHE MIT DURCH KARENZZEITEN PRIORISIERTE DATENTELEGRAMME KOMMUNIZIEREN**
PASSENGER TRANSPORT SYSTEM WITH CENTRAL CONTROL UNIT AND A PLURALITY OF FIELD DEVICES COMMUNICATING USING DATA TELEGRAMS PRIORITISED USING WAITING PERIODS
INSTALLATION DE TRANSPORT DE PERSONNES COMPRENANT UNE UNITE DE COMMANDE CENTRALE ET PLUSIEURS APPAREILS DE TERRAIN COMMUNIQUANT AVEC DES TELEGRAMMES DE DONNEES PRIORITAIRES PAR DES PERIODES D'ATTENTE

(30) Priorität: 09.06.2016 EP 16173799
(43) Veröffentlichungstag der Anmeldung: 17.04.2019
(73) Patentinhaber: Inventio AG, 6052 Hergiswil (CH)
(72) Erfinder: SONNENMOSER, Astrid, 6280 Hochdorf (CH); LUSTENBERGER, Ivo, 6018 Buttisholz (CH); HARTMANN, Thomas, 6277 Kleinwangen (CH); KNECHT, Adrian, 5312 Döttingen (CH); HEINZ, Kurt, 8107 Buchs (CH)
(86) Internationale Anmeldenummer: PCT/EP2017/063798
(87) Internationale Veröffentlichungsnummer: WO 2017/211875

(56) Entgegenhaltungen:
- JP-A- 2001 206 654
- US-A- 5 854 454
- US-B1- 6 267 219
- Wikipedia: "Carrier sense multiple access with collision avoidance and resolution using priorities", , 27. Mai 2015 (2015-05-27), XP055328495, Gefunden im Internet: URL:https://en.wikipedia.org/wiki/Carrier_ sense_multiple_access_with_collision_avoid ance_and_resolution_using_priorities [gefunden am 2016-12-13]

## Beschreibung

Die vorliegende Erfindung betrifft eine Personentransportanlage, wie beispielsweise eine Aufzuganlage, bei der mehrere Feldgeräte wie z.B. Türschalter, Sicherheitsschalter, o.ä. vorgesehen sind, welche mit einer zentralen Steuereinheit kommunizieren.

Personentransportanlagen werden meist dazu eingesetzt, in Gebäuden oder Bauwerken Personen oder Gegenstände zu befördern. Eine Personentransportanlage kann beispielsweise als Aufzuganlage ausgebildet sein. Alternativ kann eine Personentransportanlage als Fahrtreppe oder Fahrsteig eingerichtet sein.

Nachfolgend werden mögliche Ausgestaltungen von Personentransportanlagen bzw. von Ausführungsformen der Erfindung meist am Beispiel von Aufzuganlagen erläutert. Ausführungsformen der Erfindung lassen sich aber in analoger Weise auch auf Personentransportanlagen in Form von Fahrsteigen, Fahrtreppen oder Ähnlichem umsetzen.

Aufzuganlagen dienen im Allgemeinen dazu, Personen beispielsweise innerhalb eines Bauwerks zwischen verschiedenen Stockwerken befördern zu können. Hierzu kann im Regelfall eine Aufzugskabine innerhalb eines meist vertikalen Aufzugschachts verlagert werden. Wenn die Aufzugskabine ein gewünschtes Stockwerk erreicht hat, kann eine Aufzugtür und gegebenenfalls mit ihr eine zugehörige Stockwerktür geöffnet werden, um Personen einen Zutritt zu der Aufzugskabine bzw. ein Verlassen der Aufzugskabine zu ermöglichen.

Funktionen der Aufzuganlage wie beispielsweise ein Betätigen ihres die Aufzugskabine verlagernden Antriebs werden meist von einer zentralen Steuereinheit gesteuert. Die zentrale Steuereinheit kann insbesondere auch sicherheitsrelevante Funktionen der Aufzuganlage kontrollieren. Dazu kann eine Sicherheitsüberwachungseinheit als Teil der Steuereinheit oder in Kommunikation mit der Steuereinheit vorgesehen sein. Die zentrale Steuereinheit kann dabei beispielsweise Informationen berücksichtigen, die sie durch Verarbeiten von Sensorsignalen oder Sensordaten erhalten kann. Die Funktionen der Aufzugsanlage können auch von mehr als einer Steuereinheit gesteuert werden, beispielsweise von einer Steuereinheit, die unter anderem den Antrieb ansteuert und einer weiteren Steuereinheit, die Sicherheitsfunktionen überwacht. Nachfolgend soll unter einer zentralen Steuereinheit jede Steuereinheit verstanden werden, die Sensorsignale verarbeitet und/oder Steuersignale erzeugt. Die Sensorsignale oder Sensordaten können insbesondere von Geräten wie zum Beispiel Türschaltern oder anderen Sicherheitsschaltern stammen, welche in dem die Aufzuganlage aufnehmenden Bauwerk verteilt angeordnet sind und dort beispielsweise lokal vorherrschende Bedingungen oder Zustände detektieren oder messen. Solche Geräte werden hierin nachfolgend als Feldgeräte bezeichnet.

Ferner kann die Steuereinheit selbst Steuersignale erzeugen und an innerhalb des Bauwerks verteilt angeordnete andere Geräte, die beispielsweise über die Steuersignale umsetzende Aktoren verfügen können, übertragen. Die Aktoren können lokal vorherrschende Bedingungen oder Zustände gezielt beeinflussen. Alternativ können Aktoren beispielsweise auch Informationen ausgeben, z.B. optisch oder akustisch. Auch über Aktoren verfügende Geräte sollen hierin nachfolgend als Feldgeräte bezeichnet werden.

Daten bzw. Signale werden in modernen Aufzuganlagen meist über Bussysteme, manchmal auch als "Feldbussysteme" oder kurz "Feldbusse" bezeichnet, zwischen den Feldgeräten und der zentralen Steuereinheit übertragen. Hierdurch können insbesondere bei sehr grossen Aufzuganlagen, beispielsweise in hohen Gebäuden, eine Verkabelung zwischen den Feldgeräten und der zentralen Steuereinheit vereinfacht und/oder Datenübertragungszeiten kurz gehalten werden.

EP 2 251 293 A1 beschreibt eine herkömmliche Aufzugsteuervorrichtung mit einer Feldbus-Schnittstelle.

US 6,267,219 B1 beschreibt eine herkömmliche Aufzugsteuervorrichtung mit einem Feldbus in Form eines CAN-Bus.

Es kann ein Bedarf an einer Personentransportanlage bestehen, bei der eine Kommunikation zwischen einer zentralen Steuereinheit und Feldgeräten der Personentransportanlage schnell und zuverlässig durchgeführt werden kann. Insbesondere kann ein Bedarf an einer Personentransportanlage bestehen, bei der unterschiedliche Arten von Daten und Informationen schnell und entsprechend ihrer Dringlichkeit priorisiert übertragen werden können, wobei gleichzeitig sichergestellt ist, dass auch Daten und Informationen mit vergleichsweise niedriger Dringlichkeit sicher übertragen werden können. Insbesondere kann ein Bedarf an einer einfach realisierten Priorisierung bestehen. Ferner kann ein Bedarf an einer kostengünstigen Personentransportanlage bestehen, insbesondere einer Personentransportanlage mit einer kostengünstigen Datenkommunikationsmöglichkeit. Ferner kann ein Bedarf an einem Verfahren zum Übertragen von Daten innerhalb einer Personentransportanlage, einem Computerprogrammprodukt, welches einen Computer dazu anweist, ein solches Verfahren durchzuführen oder zu steuern, sowie einem computerlesbaren Medium mit einem solchen darauf gespeicherten Computerprogrammprodukt bestehen.

Zumindest einem der genannten Bedürfnisse kann mit einem Gegenstand gemäss einem der unabhängigen Patentansprüche entsprochen werden. Vorteilhafte Ausführungsformen sind in den abhängigen Patentansprüchen sowie der nachfolgenden Beschreibung dargelegt.

Ein erster Aspekt der vorliegenden Erfindung betrifft eine Personentransportanlage. Die Personentransportanlage weist eine zentrale Steuereinheit, eine Mehrzahl von Feldgeräten und ein insbesondere serielles Bussystem auf. Die zentrale Steuereinheit dient zum Steuern von Funktionen der Personentransportanlage. Die Feldgeräte sind innerhalb der Personentransportanlage räumlich verteilt angeordnet. Das Bussystem ist dazu ausgelegt, Daten zwischen der zentralen Steuereinheit und den Feldgeräten zu übertragen. Jedes der Feldgeräte ist dabei dazu eingerichtet, Daten über das Bussystem an die zentrale Steuereinheit und/oder an ein anderes Feldgerät auszugeben. Alternativ oder ergänzend ist die zentrale Steuereinheit dazu eingerichtet, Daten über das Bussystem an eines der Feldgeräte auszugeben. Die zentrale Steuereinheit und/oder die Feldgeräte sind dazu eingerichtet, ein Vorliegen einer aktuellen Datenübertragung über das Bussystem sowie ein Beenden einer Datenübertragung über das Bussystem zu erkennen. Die zentrale Steuereinheit und/oder die Feldgeräte sind dazu eingerichtet, verschiedene Typen von Datentelegrammen über das Bussystem auszugeben. Die verschiedenen Typen von Datentelegrammen unterscheiden sich dabei hinsichtlich ihrer Dringlichkeit. Die zentrale Steuereinheit und/oder die Feldgeräte sind jeweils dazu eingerichtet, eigene Datentelegramme erst über das Bussystem auszugeben, wenn keine sonstige aktuelle Datenübertragung über das Bussystem stattfindet und nachdem eine Karenzzeit seit Beenden einer vorangegangenen Datenübertragung über das Bussystem verstrichen ist. Jedem Typ von Datentelegramm ist dabei eine individuelle Karenzzeit abhängig von der jeweiligen Dringlichkeit des Typs von Datentelegramm zugeordnet.

Einem Typ eines Datentelegramms ist insbesondere eine individuelle Karenzzeit zugeordnet, die direkt mit Beenden einer vorangegangenen Datenübertragung über das Bussystem startet. Es ist aber auch möglich, dass die Karenzzeit, die nach Beenden einer vorangegangenen Datenübertragung über das Bussystem abgewartet wird, aus zwei Teilen zusammengesetzt ist. Der erste Teil ist dabei die Zeit zwischen Beenden einer vorangegangenen Datenübertragung über das Bussystem und dem Zeitpunkt an dem ein Datentelegramm über das Bussystem auszugeben werden soll. An diesen ersten Teil schliesst sich ein zweiter Teil an, dessen Länge vom Typ eines Datentelegramms abhängig ist.

Die zentrale Steuereinheit und/oder die Feldgeräte sind dazu eingerichtet, die einem Typ von Datentelegramm zugeordnete Dringlichkeit abhängig von aktuellen Bedingungen zu variieren. Darunter soll auch verstanden werden, dass auch nur die Dringlichkeit eines einzelnen Datentelegramms variiert wird.

Mit anderen Worten braucht die Dringlichkeit, die einem Typ von Datentelegramm zugeordnet ist, nicht unter allen Bedingungen fest sein, sondern es kann vorgesehen sein, dass die Steuereinheit bzw. das Feldgerät, welche(s) ein solches Datentelegramm aussenden möchte, situationsbedingt die Dringlichkeit dieses Datentelegramms bzw. dieses Typs von Datentelegramm festlegen oder variieren, insbesondere erhöhen kann.

Mit der genannten Erhöhung der Dringlichkeit wird erreicht, dass Datentelegramme, denen grundsätzlich eine geringe Dringlichkeit zugeordnet ist, sicher gesendet werden können.

Die Steuereinheit bzw. das Feldgerät kann dabei dazu ausgelegt sein, die bei dem variierten Festlegen der Dringlichkeit zu berücksichtigenden aktuellen Bedingungen selbst feststellen zu können. Solche Bedingungen können von aktuellen Betriebseigenschaften der Personentransportanlage und/oder ihren Komponenten abhängig sein.

Insbesondere kann die Steuereinheit oder ein Feldgerät feststellen, dass bereits mehrere Versuche, ein Datentelegramm minderer Dringlichkeit auszugeben, gescheitert sind, da aktuell dringlichere Datentelegramme zu übermitteln waren, und kann daraufhin die Dringlichkeit seines zu übermittelnden Datentelegramms temporär erhöhen. Beispielsweise kann die Steuereinheit oder ein Feldgerät nach zwei bis zehn, insbesondere nach drei bis fünf gescheiterten Versuchen, ein Datentelegramm minderer Dringlichkeit auszugeben, die Dringlichkeit des genannten Datentelegramms temporär erhöhen. Die Dringlichkeit wird insbesondere nur so lange erhöht, bis das Datentelegramm erfolgreich ausgegeben werden konnte.

Alternativ oder ergänzend können die aktuellen Bedingungen, in Abhängigkeit derer die Dringlichkeit eines Datentelegramms variiert werden soll, auch Umwelteinflüsse oder Umweltbedingungen wiedergeben. Beispielsweise kann es verschiedene Typen von Spontanmeldungen geben, die abhängig von solchen Umweltbedingungen als unterschiedlich dringlich einzustufen sind. Zum Beispiel können zu bestimmten Uhrzeiten oder bei bestimmten Klimabedingungen manche Spontanmeldungen als dringlicher zu behandeln sein als zu anderen Uhrzeiten oder Klimabedingungen.

Mögliche Merkmale und Vorteile von Ausführungsformen der Erfindung können unter anderem und ohne die Erfinder einzuschränken als auf nachfolgend beschriebenen Ideen und Erkenntnissen beruhend angesehen werden.

Wie einleitend kurz angemerkt, kommuniziert in modernen Personentransportanlagen eine zentrale Steuereinheit meist mit einer Vielzahl von Feldgeräten. Gegebenenfalls können die Feldgeräte auch untereinander kommunizieren. Zur Vereinfachung der Kommunikation und insbesondere der hierfür notwendigen Infrastruktur werden meist serielle Bussysteme eingesetzt. Bei einem solchen Bussystem ist die zentrale Steuereinheit nicht notwendigerweise separat mit jedem einzelnen der Feldgeräte durch eine individuelle Verdrahtung verbunden, so dass zum Beispiel eine Vielzahl von im Wesentlichen parallel zueinander verschalteten Kabeln vorgesehen sein müsste.

Stattdessen können beispielsweise mehrere Feldgeräte über eine gemeinsame Verdrahtung bzw. ein zentrales Datenkabel mit der zentralen Steuereinheit und gegebenenfalls auch untereinander Daten austauschen. Eine zeitliche Reihenfolge sowie eine Art, wie Daten dabei über gemeinsam genutzte Bereiche bzw. Kabel des Bussystems übertragen werden, werden durch ein spezifisches Datenübertragungsprotokoll geregelt.

Beispielsweise können in der Personentransportanlage Feldgeräte dazu eingerichtet sein, von einem Sensor erzeugte Sensordaten über das Bussystem an die zentrale Steuereinheit auszugeben. Der Sensor kann dabei Teil des Feldgeräts sein. Alternativ kann der Sensor auch lediglich mit dem Feldgerät verbunden sein, so dass das Feldgerät als eine Art Datenübertragungsknoten für den Sensor dient. Sensoren können dabei dazu ausgelegt sein, unterschiedlichste physikalische Grössen zu erfassen, um beispielsweise für eine Sicherheit der Personentransportanlage relevante Parameter permanent oder periodisch überwachen zu können.

Alternativ können Feldgeräte über einen oder mehrere Aktoren verfügen, um bestimmte Aktionen innerhalb der Personentransportanlage ausführen zu können bzw. diese geeignet beeinflussen zu können. Die zentrale Steuereinheit kann dabei dazu eingerichtet sein, von einem Aktor umzusetzende Steuerdaten über das Bussystem an eines der Feldgeräte auszugeben. Der Aktor kann wiederum Teil des Feldgeräts oder lediglich mit dem Feldgerät verbunden sein.

Im konkreten Beispiel einer Personentransportanlage in Form einer Aufzuganlage können Feldgeräte bildende Sensoren beispielsweise in einem Schachtkopf, einer Schachtgrube oder einem Schachtboden eines Aufzugschachts, aber auch an oder auf einer Aufzugkabine angebracht sein. Jeder der Sensoren kann dazu dienen, lokale Zustände, Grössen oder Parameter innerhalb der Aufzuganlage zu detektieren bzw. zu überwachen.

Beispielsweise können Türsensoren einen aktuellen Schliesszustand einer Aufzugtür oder einer Stockwerktür überwachen, so dass der zentralen Steuereinheit durch Übermittlung entsprechender Daten mitgeteilt werden kann, ob die Aufzugtür bzw. eine bestimmte Stockwerktür aktuell offen oder geschlossen ist. Alternativ oder ergänzend können in einer Aufzuganlage Sensoren vorgesehen sein, die beispielsweise ermitteln können, ob Gegenstände wie zum Beispiel Leitern innerhalb des Aufzugschachts sich korrekt verstaut an für ihre Lagerung vorgesehenen Positionen befinden, ob sich Personen wie zum Beispiel Wartungspersonal innerhalb des Aufzugschachts aufhalten, etc.

Aktoren können in einer Aufzuganlage beispielsweise dazu vorgesehen sein, von der zentralen Steuereinheit gesteuert beispielsweise Informationen oder Warnsignale optisch oder akustisch wahrnehmbar auszugeben. Auch mechanische Grössen innerhalb der Aufzuganlage können beispielsweise durch mechanisch arbeitende Aktoren beeinflusst werden.

Ein korrektes Funktionieren der in einer Personentransportanlage eingesetzten Feldgeräte kann für ein Funktionieren der Personentransportanlage und insbesondere für eine Sicherheit der Personentransportanlage essenziell sein. Daher sollte im Regelfall sichergestellt sein, dass jedes der Feldgeräte fehlerfrei funktioniert und über das Bussystem Daten mit der zentralen Steuereinheit ausgetauscht werden können. Ausserdem sollte eine Datenkommunikation innerhalb der Personentransportanlage dergestalt ablaufen können, dass insbesondere für eine Sicherheit der Personentransportanlage relevante Daten ausreichend schnell von einem der Feldgeräte hin zu der zentralen Steuereinheit bzw. umgekehrt kommuniziert werden.

Eine Art und Weise, wie Daten über das Bussystem zwischen der zentralen Steuereinheit und den Feldgeräten kommuniziert werden, wird im Allgemeinen wie einleitend angemerkt durch ein die Datenübertragung regelndes Protokoll vorgegeben. Dabei wird unter anderem geregelt, ob bzw. wann ein Feldgerät mit der Steuereinheit kommunizieren, also ein Datentelegramm über das Bussystem absetzen oder senden darf. Generell wird von dem Protokoll dabei vorgegeben, dass eine aktuelle Datenübertragung nicht unterbrochen werden sollte. Die Steuereinheit und die Feldgeräte sind daher vorzugsweise dazu eingerichtet, zu erkennen, ob aktuell eine Datenübertragung über das Bussystem stattfindet und gegebenenfalls mit Versuchen, eigene Daten über das Bussystem zu übermitteln, wenigstens so lange zu warten, bis die aktuelle Datenübertragung abgeschlossen ist.

Sofern beispielsweise mehrere Feldgeräte oder die Steuereinheit gleichzeitig über das Bussystem Daten zu der zentralen Steuereinheit und/oder zu anderen Feldgeräten übertragen wollen, muss ferner geregelt sein, welche Daten priorisiert über das Bussystem übertragen werden sollen, das heisst, welches Feldgerät oder die Steuereinheit zuerst seine Daten über das Bussystem senden kann.

Bei herkömmlichen Bussystemen wie beispielsweise dem seriellen CAN-Bussystem (CAN - controller area network) wird die Entscheidung über die Priorisierung von Datenübertragungen zwischen den Feldgeräten und der zentralen Steuereinheit meist aufgrund fest vorgegebener Kriterien durchgeführt. Beispielsweise erfolgt bei dem beispielsweise in Fahrzeugen häufig eingesetzten CAN-Bussystem eine Priorisierung von Datenübertragungen meist auf Basis eines Obj ekt-Identifiers jedes Datentelegramms. Dieser Objekt-Identifier kennzeichnet den Inhalt des Datentelegramms und nicht das sendende Feldgerät. Ein Datentelegramm mit einem niedrigeren Objekt-Identifier wird dabei im Allgemeinen priorisiert vor Datentelegrammen mit einem höheren Objekt-Identifier über das Bussystem übertragen. Dazu kann jedes Feldgerät den Bus überwachen, während es gerade ein Datentelegramm mit einem Objekt-Identifier sendet. Senden zwei Feldgeräte gleichzeitig, so überschreibt das erste dominante Bit eines der beiden Datentelegramme das entsprechend rezessive Bit des anderen, was das dieses Datentelegramm sendende Feldgerät erkennen kann und seinen Übertragungsversuch daraufhin beenden kann. Durch ein solches Verfahren kann eine Hierarchie von Nachrichten bzw. Datenübertragungen untereinander vorgegeben werden. Die Hierarchie ist dabei nachrichtenspezifisch, das heisst eine Nachricht oder ein Datentelegramm mit einem niedrigeren Objekt-Identifier wird im Regelfall immer vorrangig vor Nachrichten oder Datentelegrammen mit höherem Objekt-Identifier übertragen. In einem solchen System muss im Allgemeinen vorab, das heisst bereits bei Auslegung des gesamten Systems, entschieden werden, welche Nachricht oder Datentelegramm im Regelfall zeitkritische Daten enthalten und somit eine hohe Priorität bei der Datenübertragung erhalten sollen und diesen Datentelegrammen muss dann ein niedriger Objekt-Identifier zugeschrieben werden.

Voraussetzung für das Funktionieren der beschriebenen Priorisierung ist, dass jeder Objekt-Identifier nur genau einmal vorkommt. Wenn jedes Feldgerät jeweils nur ein Datentelegramm sendet, ist damit jedem Feldgerät über den Objekt-Identifier des von ihm versendeten Datentelegramms eine Priorisierung zugeordnet. Insbesondere in Personentransportanlagen kann es jedoch häufig vorkommen, dass eine generell zutreffende Priorisierung von Feldgeräten bei der Datenübertragung mit der zentralen Steuereinheit nicht sinnvoll erscheint.

Beispielsweise kann in einer Aufzuganlage eine Vielzahl von Feldgeräten installiert sein, welche beispielsweise mit Türsensoren jeweils den Öffnungs- bzw. Schliesszustand von Stockwerktüren überwachen sollen. Da es für einen sicheren Betrieb der Aufzuganlage im Allgemeinen notwendig ist, dass vor einem Verfahren einer Aufzugkabine alle Stockwerktüren der Aufzuganlage geschlossen sind, sind die Daten aller die jeweiligen Schliesszustände überwachenden Feldgeräte gleich wichtig, das heisst jedes der Feldgeräte sollte seine Information, dass eine Stockwerktür beispielsweise nicht korrekt geschlossen ist, mit gleicher Dringlichkeit an die zentrale Steuereinheit übertragen können.

Andererseits kann es gerade bei Personentransportanlagen notwendig sein, dass Feldgeräte verschiedene Typen oder Arten von Datentelegrammen an die zentrale Steuereinheit übermitteln bzw. von dieser empfangen können. Die Typen von Datentelegrammen können sich dabei hinsichtlich ihres Inhaltes unterscheiden. Insbesondere können sich die Typen von Datentelegrammen hinsichtlich der Dringlichkeit, mit der sie über das Bussystem übermittelt werden sollen, unterscheiden. Mit anderen Worten können mehrere oder alle der in einer Personentransportanlage vorgesehenen Feldgeräte dazu ausgelegt sein, situationsgerecht sowohl Datentelegramme mit hoher Priorität über das Bussystem übertragen zu können als auch zum Beispiel weniger wichtige Datentelegramme mit niedriger Priorität über das Bussystem übertragen zu können.

Bei einer Personentransportanlage, insbesondere bei einer Personentransportanlage in Form einer Aufzuganlage, können die Feldgeräte beispielsweise dazu ausgelegt sein, sowohl sogenannte Spontanmeldungen als auch sogenannte sporadische Prüfmeldungen und sogenannte zyklische Prüfmeldungen über das Bussystem mit der zentralen Steuereinheit austauschen zu können. Die Spontanmeldungen geben dabei eine Zustandsänderung bei dem Feldgerät bzw. einem diesen Feldgerät zugeordneten Sensor an. Spontanmeldungen sollen dabei mit hoher Dringlichkeit übertragen werden können. Sporadische Prüfmeldungen geben ein Ergebnis einer komplexen Überprüfung einer Funktionsfähigkeit des Feldgeräts an und sollen mit mittlerer Dringlichkeit übertragen werden können. Zyklische Prüfmeldungen geben lediglich ein Ergebnis einer einfachen Überprüfung einer Funktionsfähigkeit des Feldgeräts an und sollen mit einer verhältnismässig niedrigen Dringlichkeit über das Bussystem übertragen werden können.

Am Beispiel einer Aufzuganlage können Spontanmeldungen beispielsweise angeben, dass sich der Zustand eines einen Schliesszustand einer Stockwerktür überwachenden Sensors oder Schalters geändert hat. Eine solche Zustandsänderung ist im Allgemeinen nicht zeitlich vorhersehbar. Da sie einen sicherheitsrelevanten Aspekt der Aufzuganlage betrifft, sollte sie spontan und mit hoher Dringlichkeit an die Steuereinheit übermittelt werden, damit die Steuereinheit beispielsweise erkennen kann, dass aktuell nicht alle Stockwerktüren korrekt geschlossen sind und verhindern kann, dass die Aufzugkabine bewegt wird.

Ergänzend kann jedes der Feldgeräte während des Betriebs der Aufzuganlage beispielsweise in gewissen Zeitabständen einer komplexen Überprüfung seiner Funktionsfähigkeit unterzogen werden. Dabei können unterschiedliche Funktionen des Feldgeräts überprüft werden. Beispielsweise kann überprüft werden, ob Sensoren, Schalter etc. des Feldgeräts auf sich ändernde Randbedingungen oder sich ändernde Umgebungsbedingungen korrekt reagieren und entsprechende Daten übertragen. Solche komplexen Übertragungen finden verhältnismässig selten, das heisst in verhältnismässig langen Zeitabständen, statt, ihre Ergebnisse sind jedoch relevant für einen sicheren Betrieb der Aufzuganlage und sollten daher mit zumindest mittlerer Dringlichkeit über das Bussystem übertragen werden.

Weiterhin kann in der Aufzuganlage vorgesehen sein, eine Funktionsfähigkeit der Feldgeräte in verhältnismässig kurzen Zeitabständen zumindest einer einfachen Überprüfung zu unterziehen. Beispielsweise kann eine einfache Überprüfung zumindest überwachen, ob ein Feldgerät noch korrekt mit dem Bussystem verbunden ist oder ob dieses beispielsweise wegen einer ungewollten Unterbrechung einer Datenleitung nicht mehr mit dem Bussystem kommunizieren kann. Ferner kann eine solche einfache Überprüfung auch überwachen, ob das Feldgerät noch mit Energie versorgt ist und somit arbeiten kann. Die einfachen Überprüfungen werden dabei zwar relativ häufig durchgeführt, da ein Risiko, dass sie einen fehlerhaften Zustand eines Feldgeräts detektieren, jedoch relativ gering ist, können Überprüfungsergebnisse wiedergebende zyklische Prüfmeldungen mit einer verhältnismässig niedrigen Dringlichkeit über das Bussystem übertragen werden.

Um es nun bei der Datenübertragung innerhalb einer Personentransportanlage jedem der Feldgeräte zu ermöglichen, verschiedene Typen von Datentelegrammen über das Bussystem auszugeben bzw. von diesem zu empfangen, und um dabei einer Dringlichkeit, mit der ein spezieller Typ von Datentelegramm übertragen werden soll, Rechnung zu tragen, wird vorgeschlagen, die zentrale Steuereinheit und/oder die Feldgeräte jeweils nicht nur dazu einzurichten, zu erkennen, ob aktuell eine Datenübertragung über das Bussystem stattfindet, sondern zusätzlich auch zu erkennen, wenn bzw. wann eine Datenübertragung über das Bussystem beendet wurde. Im Gegensatz zu mit Bussystemen herkömmlicherweise ausgeführten Datenübertragungen soll dann jedoch nicht sofort von jedem Feldgerät versucht werden, seine eigenen Daten zu übertragen. Stattdessen sollen die Feldgeräte eigene Datentelegramme über das Bussystem erst versuchen auszugeben, wenn seit dem Beenden einer vorangegangenen Datenübertragung über das Bussystem eine gewisse Karenzzeit verstrichen ist. Die Karenzzeit soll dabei von dem Typ von Datentelegramm abhängig gewählt sein und somit abhängig von der Dringlichkeit dieses speziellen Typs von Datentelegramm sein. Damit ist eine besonders einfache Realisierung einer Priorisierung der Datentelegramme möglich.

Mit anderen Worten soll beispielsweise ein Feldgerät, welches ein Datentelegramm übertragen soll, welches von einem Typ mit hoher Dringlichkeit ist, nach dem Erkennen des Beendens einer vorangehenden Datenübertragung eine kürzere Karenzzeit lang warten, bis es mit seiner Datenausgabe über das Bussystem beginnt, als ein anderes Feldgerät, welches lediglich ein Datentelegramm von einem weniger dringlichen Typ übertragen soll.

Konkret am obigen Beispiel veranschaulicht soll eine Aufzuganlage zwischen ihrer zentralen Steuereinheit und ihren Feldgeräten Spontanmeldungen mit einer höheren Dringlichkeit übermitteln können, als dies der Fall ist für sporadische Prüfmeldungen oder zyklische Prüfmeldungen. Ein erstes Feldgerät, das eine Zustandsänderung erkennt und entsprechend eine Spontanmeldung an die zentrale Steuereinheit übermitteln möchte, wartet somit nach Beenden einer vorangehenden Datenübertragung lediglich eine kurze Karenzzeit ab, bevor es versucht, seine eigene Spontanmeldung über das Bussystem an die zentrale Steuereinheit auszugeben. Ein zweites Feldgerät, welches zeitgleich eine sporadische Prüfmeldung oder eine zyklische Prüfmeldung an die zentrale Steuereinheit übermitteln wollte, wird eine längere Karenzzeit abwarten, so dass in dem Zeitpunkt, zu dem das zweite Feldgerät versucht, seine weniger dringliche Prüfmeldung auszugeben, das erste Feldgerät bereits angefangen hat, seine Spontanmeldung über das Bussystem zu übermitteln. Das zweite Feldgerät wird somit erkennen, dass aktuell eine Datenübertragung läuft und muss somit abwarten, bis diese dringliche Datenübertragung abgeschlossen ist.

Im Ergebnis ergibt sich hierdurch, dass die dringliche Spontanmeldung dadurch, dass sie mit einer kürzeren einzuhaltenden Karenzzeit zu übermitteln ist, vor der mit einer längeren Karenzzeit zu übermittelnden Prüfmeldung über das Bussystem ausgegeben werden kann und somit faktisch eine höhere Priorisierung geniesst.

Gemäss einer Ausführungsform sind das Bussystem, die zentrale Steuereinheit und die Feldgeräte dazu ausgelegt, Daten mit einer bestimmten Datenübertragungsrate zu kommunizieren. Dabei unterscheiden sich die individuellen Karenzzeiten von Typen von Datentelegrammen unterschiedlicher Dringlichkeiten um mindestens diejenige Zeitdauer voneinander, die bei der bestimmten Datenübertragungsrate zur Übertragung einer einzelnen Dateneinheit benötigt wird. Vorzugsweise unterscheiden sich die verschiedenen individuellen Karenzzeiten sogar um das mindestens Vierfache der Dauer, die bei der bestimmten Datenübertragungsrate zur Übertragung einer einzelnen Dateneinheit benötigt wird.

Mit anderen Worten sollen sich die Karenzzeiten T₁, T₂, T₃ verschiedener Datentelegramme, die sich hinsichtlich ihrer Dringlichkeiten unterscheiden, bezüglich ihrer Zeitdauer zumindest derart stark voneinander unterscheiden, dass dies angesichts der in der Personentransportanlage angewendeten Datenübertragungsrate für die Komponenten der Personentransportanlage unterscheidbar ist. Wenn beispielsweise die Übertragung einer einzelnen Dateneinheit bereits eine bestimmte Übertragungszeitdauer Δt benötigt, sollten sich die Karenzzeiten T₁, T₂, T₃ unterschiedlicher Datentelegrammtypen um Karenzzeitenunterschiede ΔT unterscheiden, die gleich oder grösser, vorzugsweise sogar deutlich grösser, als diese Übertragungszeitdauer Δt ist, da kürzere Karenzzeitenunterschiede von den in der Aufzuganlage eingesetzten Geräten nicht sicher erkannt werden könnten. Das heisst, T₁ + ΔT = T₂ und T₂ + ΔT = T₃, wobei ΔT ≥ Δt, vorzugsweise ΔT ≥ 2^{∗}Δt oder sogar ΔT ≥ 4^{∗}Δt. Eine einzelne Dateneinheit kann dabei ein einzelnes Bit oder gegebenenfalls auch eine Folge von Bits, beispielsweise ein oder mehrere Bytes, sein und soll eine einzelne Informationen innerhalb der Personentransportanlage transportieren können. Je höher eine in der Aufzuganlage einzusetzende Datenübertragungsrate ist, desto kürzer ist die Übertragungszeitdauer Δt und desto kürzer können somit generell die Unterschiede ΔT in den für verschiedene Datentelegrammtypen eingesetzten Karenzzeiten sein.

Gemäss einer speziellen Ausführungsform kann das Bussystem, die zentrale Steuereinheit und die Feldgeräte beispielsweise dazu ausgelegt sein, Daten mit einer Datenübertragungsrate von 9600 Baud (= Bit/s) zu kommunizieren. In diesem Fall sollten sich die verschiedenen individuellen Karenzzeiten um wenigstens 1 ms, vorzugsweise wenigstens 2 ms, unterscheiden.

Im oben genannten Beispiel könnte die Karenzzeit für Spontanmeldungen dann beispielsweise 3 ms, die Karenzzeit für sporadische Prüfmeldungen beispielsweise 5 ms und die Karenzzeit für zyklische Prüfmeldungen beispielsweise 7 ms betragen.

Gemäss einer Ausführungsform sind mehrere Feldgeräte der Aufzuganlage bezüglich ihrer Hardware gleich ausgebildet und sind jeweils dazu ausgelegt, verschiedene Typen von Datentelegrammen über das Bussystem auszugeben, wobei sich die verschiedenen Typen hinsichtlich ihrer Dringlichkeit unterscheiden.

Mit anderen Worten betrifft diese Ausführungsform insbesondere den bei Personentransportanlagen häufig auftretenden Fall, dass mehrere Feldgeräte im Wesentlichen gleich ausgebildet sind und "gleichrangig" innerhalb der Personentransportanlage mit der zentralen Steuereinheit kommunizieren können sollen.

Beispielsweise können in einer Aufzuganlage viele Feldgeräte in Form von Türschaltern oder Türsensoren jeweils eine ihnen zugeordnete Stockwerktür hinsichtlich ihres Schliesszustandes überwachen, wobei das Überwachen einer bestimmten Stockwerktür nicht wichtiger oder dringlicher ist als das Überwachen einer anderen Stockwerktür.

Jedes dieser im Prinzip gleichrangigen Feldgeräte soll dabei selbst in der Lage sein, zwischen verschiedenen Typen von Datentelegrammen unterscheiden zu können und diese mit unterschiedlicher Dringlichkeit über das Bussystem ausgeben können.

Zum Beispiel kann das als Türschalter ausgebildete Feldgerät eine Zustandsänderung der von ihr überwachten Stockwerktür als Spontanmeldung mit hoher Dringlichkeit an die zentrale Steuereinheit melden, wohingegen Ergebnisse einer sporadischen komplexen Überprüfung oder einer häufig durchgeführten einfachen Überprüfung mit lediglich geringerer Dringlichkeit an die zentrale Steuereinheit übermittelt werden brauchen.

Die Feldgeräte können dabei im Wesentlichen gleichartig, insbesondere hinsichtlich ihrer Hardware, ausgestaltet sein. Dadurch lassen sich Kosten für eine Fertigung verschiedenartig auszugestaltender Feldgeräte und insbesondere auch hinsichtlich einer damit verbundenen komplexeren Logistik bei der Herstellung, Lagerung und/oder Installation derart unterschiedlicher Feldgeräte vermeiden.

Gemäss einer Ausführungsform sind die zentrale Steuereinheit und/oder die Feldgeräte dazu eingerichtet, Datentelegramme eines Typs hoher Dringlichkeit seltener über das Bussystem auszugeben als Datentelegramme eines Typs niedriger Dringlichkeit.

Anders ausgedrückt sollten die Datentelegrammtypen hinsichtlich der ihnen zugeordneten Dringlichkeiten möglichst derart gewählt sein, dass Datentelegramme, die beispielsweise für die Sicherheit der Aufzuganlage besonders wichtig sind, zwar nur selten übertragen werden brauchen, dann aber mit hoher Dringlichkeit, wohingegen Datentelegrammtypen, die lediglich die Funktionsfähigkeit des gesamten in der Aufzuganlage eingesetzten Datenkommunikationssystems wiederholt überwachen sollen, zwar häufig übermittelt werden sollen, ihre Übermittlung jedoch nicht besonders dringlich ist und daher zumindest zeitweilig hinter dringlicheren Datenübermittlungen zurückstehen kann.

Durch eine entsprechende Gewichtung der Dringlichkeiten verschiedener Datentelegrammtypen und der damit verbundenen einzuhaltenden Karenzzeiten kann der gesamten Datenübertragung in der Personentransportanlage eine einfach zu implementierende Möglichkeit einer Priorisierung wichtiger Datenübermittlungen ermöglicht werden.

Gemäss einer Ausführungsform sind die zentrale Steuereinheit, die Feldgeräte und/oder das Bussystem dazu eingerichtet, beim Versuch eines Ausgebens eines Datentelegramms zu überprüfen, ob zeitgleich von einem anderen Feldgerät bzw. von der Steuereinheit versucht wird, ein Datentelegramm über das Bussystem auszugeben und in einem solchen Fall anhand von Priorisierungskriterien zu entscheiden, welches der Datentelegramme über das Bussystem ausgegeben wird.

Mit anderen Worten soll bei der hierin für eine Personentransportanlage vorgesehenen Datenkommunikation und den für diese einzusetzenden Komponenten der Personentransportanlage zusätzlich zu der Möglichkeit, eine gewisse Priorisierung aufgrund von einzuhaltenden Karenzzeiten bei der Übermittlung unterschiedlicher Datentelegramme vorzusehen, auch dem Fall Rechnung getragen werden, dass trotz dieser Priorisierungsmassnahmen zwei oder mehr Feldgeräte in der Personentransportanlage gleichzeitig versuchen, Datentelegramme über das Bussystem zu übermitteln. Dies kann insbesondere auftreten, wenn zwei Feldgeräte jeweils Datentelegramme gleicher Dringlichkeit übermitteln wollen und somit nach Ablauf einer gleichen Karenzzeit nach Beendigung einer vorangehenden Datenübertragung beide versuchen, ihr Datentelegramm abzuschicken. In diesem Fall sollen weitere Priorisierungskriterien entscheiden, welches der Feldgeräte sein Datentelegramm über das Bussystem ausgeben darf und welches zunächst abwarten muss.

Solche Priorisierungskriterien können verschiedene Einflussfaktoren berücksichtigen. In einem Fall können die Priorisierungskriterien Identifikationsnummern der Feldgeräte oder den Inhalt der Nachrichtentelegramme auswerten. Beispielsweise können Feldgeräte mit einer niedrigen Identifikationsnummer Vorrang haben. Es ist ebenfalls möglich, dass wenn zwei Feldgeräte gleichzeitig senden, das erste dominante Bit eines der beiden Datentelegramme das entsprechend rezessive Bit des anderen überschreibt, was das dieses Datentelegramm sendende Feldgerät erkennen kann und seinen Übertragungsversuch daraufhin beenden kann. Dieses Vorgehen ist vergleichbar mit der oben beschriebenen Priorisierung bei einem CAN-Bus mit dem Unterschied, dass hier keine Objekt-Identifier verglichen werden. Es können auch andere gerätespezifische Priorisierungskriterien eingesetzt werden. Alternativ oder ergänzend können auch Priorisierungskriterien eingesetzt werden, die unabhängig von dem jeweiligen Feldgerät sind und stattdessen beispielsweise Umwelteinflüssen, Umweltbedingungen, einer Uhrzeit oder Ähnlichem Rechnung tragen.

Ein zweiter Aspekt der vorliegenden Erfindung betrifft ein Verfahren zur Übertragung von Datentelegrammen über ein Bussystem zwischen einer zentralen Steuereinheit und einem von mehreren Feldgeräten innerhalb einer Personentransportanlage. Die zentrale Steuereinheit und/oder die Feldgeräte sind dabei dazu eingerichtet, verschiedene Typen von Datentelegrammen über das Bussystem auszugeben, welche sich hinsichtlich ihrer Dringlichkeit unterscheiden. Das Verfahren weist zumindest die folgenden Schritte auf: Zunächst wird erkannt, ob eine aktuelle Datenübertragung über das Bussystem stattfindet, sowie wann eine vorangegangene Datenübertragung über das Bussystem beendet wurde. Ein Datentelegramm eines bestimmten Typs wird dann erst über das Bussystem ausgegeben, wenn keine aktuelle Datenübertragung über das Bussystem stattfindet und nachdem eine Karenzzeit seit Beenden einer vorangegangenen Datenübertragung über das Bussystem verstrichen ist. Jedem Typ von Datentelegramm ist dabei eine individuelle Karenzzeit abhängig von der jeweiligen Dringlichkeit dieses Datentelegrammtyps zugeordnet, wobei die einem Typ von Datentelegramm zugeordnete Dringlichkeit abhängig von aktuellen Bedingungen variiert werden kann.

Mit anderen Worten kann das Verfahren zur Übertragung von Datentelegrammen innerhalb der Personentransportanlage spezifisch dazu ausgelegt sein, die Datenkommunikation innerhalb einer Personentransportanlage derart auszuführen, wie dies weiter oben mit Bezug auf Ausführungsformen gemäss dem ersten Aspekt der vorliegenden Erfindung beschrieben wurde. In umgekehrter Weise kann eine Personentransportanlage gemäss dem ersten Aspekt der vorliegenden Erfindung auch als dazu ausgelegt angesehen werden, eine Ausführungsform des Verfahrens gemäss dem zweiten Aspekt der vorliegenden Erfindung durchführen zu können.

Die Berücksichtigung individueller Karenzzeiten abhängig vom Typ eines Datentelegramms bei der Datenübertragung über das Bussystem kann dabei in einer einfach zu implementierenden Weise eine Priorisierung von Datentelegrammübermittlungen abhängig von deren Dringlichkeit ermöglichen.

Vorzugsweise unterscheiden sich die individuellen Karenzzeiten von Typen von Datentelegrammen unterschiedlicher Dringlichkeiten dabei um mindestens diejenige Zeitdauer, die bei einer bestimmten Datenübertragungsrate innerhalb eines Bussystems zur Übertragung einzelner Dateneinheiten benötigt wird.

Die einem Datentelegramm zugeordnete Dringlichkeit wird insbesondere temporär erhöht, wenn mehrere Versuche das Datentelegramm zu senden, gescheitert sind.

Gemäss einem dritten Aspekt der vorliegenden Erfindung wird ein Computerprogrammprodukt vorgeschlagen, das computerlesbare Anweisungen aufweist, welche einen Computer bei deren Ausführung dazu anleiten, ein Verfahren gemäss einer Ausführungsform des zuvor genannten zweiten Aspekts der Erfindung auszuführen oder dieses entsprechend zu steuern.

Der Computer kann dabei beispielsweise Teil einer programmierbaren Steuereinheit der Personentransportanlage sein. Alternativ oder ergänzend kann der Computer oder Teile desselben auch in jeweiligen Feldgeräten einer Personentransportanlage integriert sein. Der Begriff Computer soll dabei breit ausgelegt werden und beispielsweise Prozessoren, CPUs oder Ähnliches umfassen. Ausserdem können Speichermedien vorgesehen sein, um dem Computer Daten zuzuführen bzw. für diesen Daten speichern zu können. Das Computerprogrammprodukt kann in einer beliebigen computerlesbaren Sprache formuliert sein.

Gemäss einem vierten Aspekt der vorliegenden Erfindung wird ein computerlesbares Medium beschrieben, welches ein darauf gespeichertes Computerprogrammprodukt gemäss einer Ausführungsform des oben genannten dritten Aspekts der Erfindung aufweist.

Mit anderen Worten kann das computerlesbare Medium ein beliebiges Medium sein, in dem computerlesbare Anweisungen temporär oder permanent gespeichert werden können und von einem Computer ausgelesen werden können. Die computerlesbaren Anweisungen können dabei auf unterschiedliche physikalische Weise gespeichert sein, beispielsweise in magnetischer Form, optischer Form, elektrischer Form etc. Beispielsweise kann das computerlesbare Medium eine CD, eine DVD, ein Flashspeicher, ein ROM (Read Only Memory), ein PROM (Programmable ROM), ein EPROM (Erasable PROM) etc. sein. Das computerlesbare Medium kann auch Teil einer grösseren Daten-speichernden Einheit wie eines Servers oder sogar des Internets sein, von dem das darin gespeicherte Computerprogrammprodukt heruntergeladen werden kann.

Es wird daraufhingewiesen, dass einige der möglichen Merkmale und Vorteile der Erfindung hierin mit Bezug auf unterschiedliche Ausführungsformen beschrieben sind, insbesondere teilweise mit Bezug auf eine Personentransportanlage und teilweise mit Bezug auf ein in dieser durchzuführendes Datenübertragungsverfahren. Ein Fachmann erkennt, dass die Merkmale in geeigneter Weise kombiniert, angepasst oder ausgetauscht werden können, um zu weiteren Ausführungsformen der Erfindung zu gelangen. Der Schutzumfang der Erfindung wird durch die beigefügten Ansprüche bestimmt.
Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Personentransportanlage in Form einer Aufzuganlage gemäss einer Ausführungsform der vorliegenden Erfindung.
Fig. 2 veranschaulicht eine zeitliche Abfolge von durch verschiedene Feldgeräte ausgegebenen Datentelegrammen in einer Personentransportanlage gemäss einer Ausführungsform der vorliegenden Erfindung gemäss einem ersten Szenario.
Fig. 3 veranschaulicht eine zeitliche Abfolge von durch verschiedene Feldgeräte ausgegebenen Datentelegrammen in einer Personentransportanlage gemäss einer Ausführungsform der vorliegenden Erfindung gemäss einem zweiten Szenario.
Die Figuren sind lediglich schematisch und nicht massstabsgetreu. Gleiche Bezugszeichen bezeichnen in den verschiedenen Figuren gleiche bzw. gleichwirkende Merkmale.

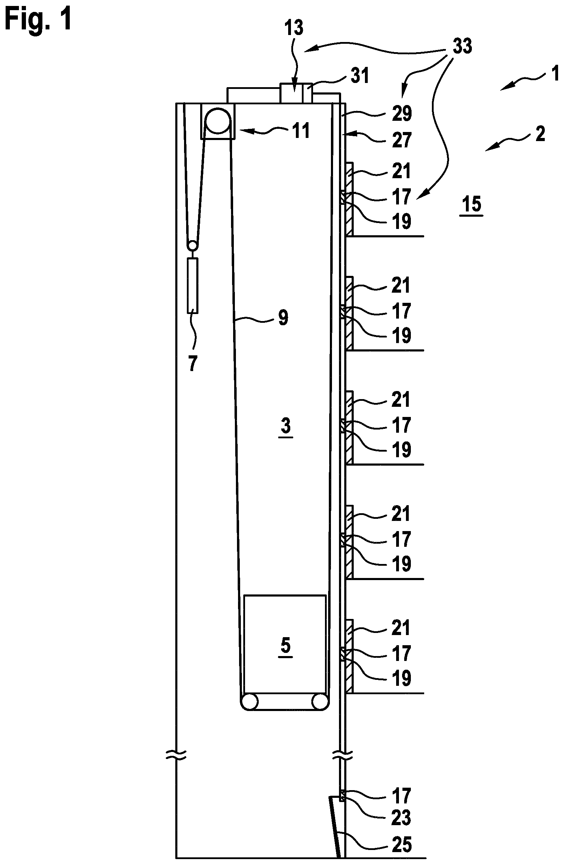

Fig. 1 zeigt eine erfindungsgemässe Personentransportanlage 1 in Form einer Aufzuganlage 2. Die Aufzuganlage 2 umfasst einen Aufzugschacht 3, in dem eine Aufzugskabine 5 und ein Gegengewicht 7 verfahren werden können. Die Aufzugskabine 5 und das Gegengewicht 7 sind hierzu an einem Seil- oder Riemen-artigen Tragmittel 9 gehalten, welches von einer Antriebsmaschine 11 verlagert werden kann. Eine Funktion der Aufzuganlage 2 und insbesondere eines Betriebs der Antriebsmaschine 11 sowie gegebenenfalls auch anderer Komponenten der Aufzuganlage 2 kann mithilfe einer zentralen Steuereinheit 13 gesteuert werden.

Um eine korrekte Funktion und insbesondere eine Sicherheit der Aufzuganlage 2 gewährleisten zu können, sind in einem die Aufzuganlage 2 aufnehmenden Bauwerk 15 mehrere Feldgeräte 17 aufgenommen. Die Feldgeräte 17 sind dabei über das Bauwerk 15 hin verteilt angeordnet.

Die Feldgeräte 17 können beispielsweise Türschalter 19 sein, welche einen Schliesszustand von Türen 21, insbesondere von Stockwerktüren, der Aufzuganlage 2 überwachen können. Ein Türschalter 19 wirkt dabei wie eine Art Sensor, welcher den aktuellen Schliesszustand einer ihm zugeordneten Tür 21 detektieren kann und sobald sich der Schliesszustand ändert dies als Datentelegramm in Form einer Spontanmeldung signalisieren kann.

Beispielsweise nahe einem Boden oder einer Grube des Aufzugschachts 3 kann ferner eine Leiter 25 gelagert sein, deren korrekt aufgeräumte Positionierung an einer Seitenwand des Aufzugschachts 3 beispielsweise mithilfe eines als Feldgerät 17 dienen überwachenden Schalters 23 überwacht wird.

Die Feldgeräte 17 können Teil eines Sicherheitskreises 27 der Aufzuganlage 2 sein und beispielsweise über eine serielle Verkabelung 29 mit der zentralen Steuereinheit 13 bzw. insbesondere mit einer zum Beispiel dort integriert vorgesehenen Sicherheitsüberwachungseinheit 31 (SSU - Safety Supervising Unit) verbunden sein. Die Verkabelung 29 sowie in den Feldgeräten 17 und/oder der zentralen Steuereinheit 13 vorgesehene Controller können dabei gemeinsam ein Bussystem 33 bilden, über das Datentelegramme zwischen den Teilnehmern einer Datenkommunikation ausgetauscht werden können.

Jedes der Feldgeräte 17 ist dazu eingerichtet, von einem Sensor erzeugte Sensorsignale auszugeben und/oder von einem Aktor umzusetzende Steuersignale zu empfangen. Dabei kann ein Feldgerät 17 beispielsweise selbst einen Sensor und/oder einen Aktor aufweisen und die von dem Sensor erzeugten Sensorsignale über externe Anschlüsse an andere Geräte, insbesondere an die zentrale Steuereinheit 13, ausgeben bzw. über solche externen Anschlüsse von anderen Geräten, insbesondere der zentralen Steuereinheit 13, empfangene Steuersignale an den Aktor leiten, damit dieser die darin enthaltenen Steueranweisungen umsetzen kann. Alternativ kann ein Feldgerät 17 lediglich als Knotenpunkt dienen, der beispielsweise Sensorsignale von einem externen Sensor oder von einem anderen Feldgerät 17 empfangen kann und diese dann an weitere Geräte ausgeben kann bzw. der von weiteren Geräten Steuersignale empfangen kann und diese dann an einen externen Aktor weitergibt, damit dieser die Steuersignale umsetzen kann.

Die zentrale Steuereinheit 13 und/oder zumindest einige der Feldgeräte 17 sind dazu eingerichtet, verschiedene Typen Datentelegrammen über das Bussystem 33 auszugeben. Die Typen von Datentelegrammen sollen sich dabei hinsichtlich ihrer Dringlichkeit betreffend die Übermittlung von der zentralen Steuereinheit 13 über das Bussystem 33 hin zu einem der Feldgeräte 17 bzw. umgekehrt von einem der Feldgeräte 17 hin zu der zentralen Steuereinheit 13 unterscheiden.

Beispielsweise sollen Feldgeräte 17 in Form von Türschaltern 19 dazu in der Lage sein, Spontanmeldungen auszugeben, mit denen eine Zustandsänderung angegeben wird, die beispielsweise einen Übergang von einer geschlossenen Tür 21 hin zu einer geöffneten Tür 21, oder umgekehrt, signalisieren soll. Da insbesondere die Information, dass eine Tür 21 in einer Aufzuganlage 2 nicht mehr geschlossen, sondern geöffnet ist, sehr wichtig für einen sicheren Betrieb der Aufzuganlage 2 ist, da daraufhin in der Regel ein Verfahren der Aufzugkabine 5 unterbunden werden muss, sollte eine solche Spontanmeldung möglichst schnell, das heisst mit hoher Dringlichkeit, von dem Türschalter 19 an die zentrale Steuereinheit 13 bzw. deren SSU 31 übermittelt werden.

Feldgeräte 17 in Form von Türschaltern 19 können ferner dazu ausgelegt sein, in periodischen Abständen komplexe Überprüfungen ihrer Funktionsfähigkeiten durchzuführen. Eine solche Überprüfung kann von einem Feldgerät 17 spontan initiiert werden, beispielsweise gemäss einem vorgegebenen Zeitplan, oder von der zentralen Steuereinheit 13 in vorgegebenen Zeitabständen veranlasst werden. Die korrekte Funktionsfähigkeit des Feldgeräts 17 ist zwar auch wichtig für ein korrektes und sicheres Funktionieren der Aufzuganlage 2, ihr wird jedoch als sporadischen Prüfmeldung im Allgemeinen eine geringere Dringlichkeit zugemessen als den Spontanmeldungen des Feldgeräts 17. Dies trifft insbesondere zu, wenn die komplexe Überprüfung ein korrektes Funktionieren des Feldgeräts 17 ergeben hat und dies lediglich der Form halber an die Steuereinheit 13 berichtet werden soll.

Den sporadischen Prüfmeldungen ist wie beschrieben grundsätzlich eine geringe Dringlichkeit zugeordnet. Das Feldgerät 17 kann insbesondere so ausgeführt sein, dass wenn die Überprüfung ein nicht korrektes Funktionieren des Feldgeräts 17 ergeben hat, die Dringlichkeit der sporadischen Prüfmeldung temporär erhöht wird. Sie wird so lange erhöht, bis die sporadische Prüfmeldung abgesetzt werden konnte.

Das Feldgerät 17 kann insbesondere so ausgeführt sein, dass es die Dringlichkeit der sporadischen Prüfmeldung temporär erhöht, wenn es die sporadische Prüfmeldung dreimal hintereinander nicht abgeben konnte. Sie wird dann ebenfalls so lange erhöht, bis die sporadische Prüfmeldung abgesetzt werden konnte.

Ferner sind Feldgeräte 17, insbesondere in Form von Türschaltern 19, häufig dazu ausgelegt, in relativ kurz aufeinanderfolgenden Zeitpunkten zumindest eine einfache Überprüfung ihrer Funktionsfähigkeit durchzuführen, um beispielsweise sicherzustellen, dass das Feldgerät 17 nicht beispielsweise durch eine mechanische Unterbrechung einer Zuleitung an einer Kommunikation über das Bussystem 33 gehindert wird. Dies kann insbesondere bei Aufzuganlagen 2 wichtig sein, da dort meist jeder einer Vielzahl von Türschaltern 19 durch einzelne "Stichleitungen" in jeweiligen Stockwerken des Bauwerks 15 mit der zentralen Verkabelung 29 innerhalb des Aufzugschachts 3 verbunden ist und eine lokale Unterbrechung einer solchen Stichleitung von der SSU 31 im Allgemeinen lediglich durch eine kurze Überprüfung von Funktionseigenschaften des Türschalters 19 erkannt werden kann. Beispielsweise soll der Türschalter 19 auf Anfrage durch die SSU 31 oder in periodischen Zeitabständen von sich aus ein kurzes Präsenzsignal schicken, welches der SSU 31 angibt, dass der Türschalter 19 noch an das Bussystem 33 angeschlossen ist und prinzipiell funktionsfähig zu sein scheint. Das Ergebnis einer solchen einfachen Überprüfung der Funktionsfähigkeit sollte zwar häufig, das heisst in relativ kurzen Zeitabständen, als zyklische Prüfmeldung an die zentrale Steuereinheit 13 übertragen werden, kann jedoch mit einer niedrigen Dringlichkeit, insbesondere einer niedrigeren Dringlichkeit als derjenigen der sporadischen Prüfmeldungen, übertragen werden. Dies trifft insbesondere zu, wenn die einfache Überprüfung ein korrektes Funktionieren des Feldgeräts 17 ergeben hat und dies lediglich der Form halber an die Steuereinheit 13 berichtet werden soll.

Auch in diesem Fall kann die Dringlichkeit der sporadischen Prüfmeldung wie beschrieben temporär erhöht werden.

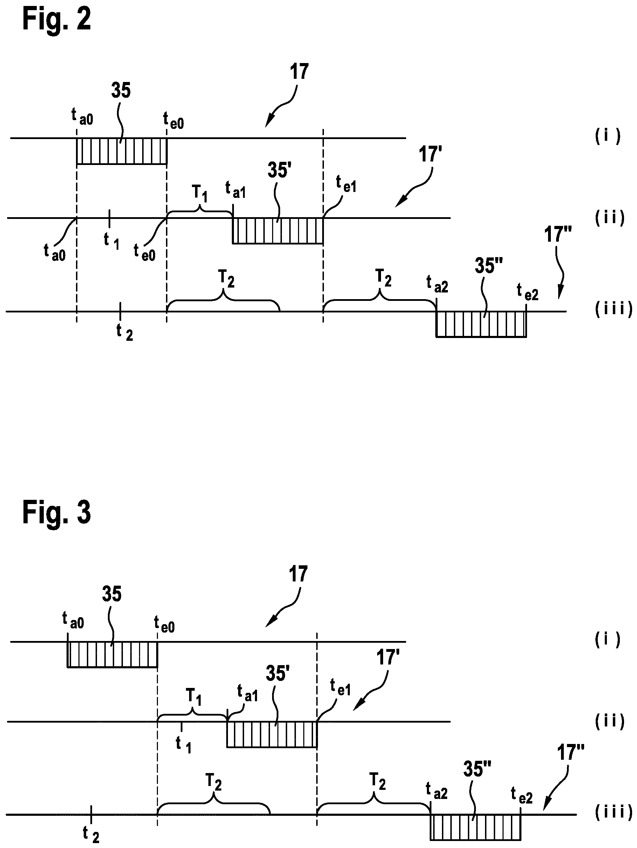

In den Fig. 2 und 3 sind zwei verschiedene Szenarien zur Übertragung von Datentelegrammen 35 von einem der Feldgeräte 17 hin zu der Steuereinheit 13 dargestellt. Die Datentelegramme 35 könnten in analoger Weise auch in umgekehrter Richtung von der zentralen Steuereinheit 13 hin zu einem der Feldgeräte 17 übertragen werden.

Es wird dabei angenommen, dass zum Zeitpunkt tₐ₀ ein Prüftelegramm 35 von irgendeinem der Feldgeräte 17 an die Steuereinheit 13 übermittelt wird. Die Datenübertragung dieses Datentelegramms 35 endet zum Zeitpunkt tₑ₀ (siehe Zeitdiagramm (i)).

Bei dem in Fig. 2 dargestellten ersten Szenario versuchen während der Datenübertragung des Datentelegramms 35 zwei weitere Feldgeräte 17', 17", jeweils Datentelegramme 35', 35" über das Bussystem 33 zu übermitteln. Ein erstes Feldgerät 17' (siehe Zeitdiagramm (ii)) versucht dies zum Zeitpunkt t₁, ein zweites Feldgerät 17" (siehe Zeitdiagramm (iii)) versucht dies kurz darauf zu einem Zeitpunkt t₂. Beide Zeitpunkte t₁, t₂ liegen vor dem Ende tₑ₀, zu der die Datenübertragung des vorangehenden Datentelegramms 35 beendet ist.

Die beiden Feldgeräte 17', 17" erkennen dabei jeweils, dass aktuell eine Datenübertragung über das Bussystem 33 stattfindet und warten daher damit, ihre eigenen Datentelegramme 35', 35" an das Bussystem 33 auszugeben. Zum Zeitpunkt tₑ₀ erkennen beide Feldgeräte 17', 17", dass die Datenübertragung des vorangehenden Datentelegramms 35 nun beendet ist.

Die von den beiden Feldgeräten 17', 17" zu übermittelnden Datentelegramme 35', 35" unterscheiden sich hinsichtlich ihrer Dringlichkeit. Beispielsweise kann das erste Feldgerät 17' ein Datentelegramm 35' einer Spontanmeldung übermitteln wollen, wohingegen das zweite Feldgerät 17" ein Datentelegramm 35" einer sporadischen Prüfmeldung übermitteln will.

Die beiden Feldgeräte 17', 17" versuchen dabei nach voneinander verschiedenen Karenzzeiten T₁, T₂, ihre jeweiligen Datentelegramme 35', 35" über das Bussystem 33 zu übermitteln. Die Karenzzeit T₁ des dringlicheren Datentelegramms 35' ist dabei kürzer als die Karenzzeit T₂ des weniger dringlichen Datentelegramms 35". Bei einer Datenübertragungsrate von typischerweise 9600 Baud kann die kürzere Karenzzeit T₁ beispielsweise 3 ms sein und die längere Karenzzeit T₂ beispielsweise 5 ms sein. Nach Ablauf der kürzeren Karenzzeit T₁ beginnend ab dem Ende tₑ₀ der vorangegangenen Datenübertragung beginnt das erste Feldgerät 17' zu einem Zeitpunkt tₐ₁ mit der Übertragung seines Datenpakets 35'. Diese endet dann zu einem Zeitpunkt tₑ₁. Nach Ablauf der längeren Karenzzeit T₂ beginnend ab dem Ende tₑ₀ der vorangegangenen Datenübertragung versucht auch das zweite Feldgerät 17", sein Datenpaket 35" zu übermitteln. Es erkennt jedoch, dass aktuell bereits eine Datenübertragung über das Bussystem 33 stattfindet, nämlich die Datenübertragung des dringlicheren Datentelegramms 35'. Das zweite Feldgerät 17" wartet daher, bis diese Datenübertragung zum Zeitpunkt tₑ₁ beendet ist. Von da an wartet es noch einmal die Karenzzeit T₂ ab, bevor es dann zu einem Zeitpunkt tₐ₂ beginnt, sein eigenes weniger dringliches Datentelegramm 35" abzuschicken. Das Senden des Datentelegramms 35" endet zu einem Zeitpunkt tₑ₂.

Obwohl beide Feldgeräte 17', 17" anfänglich fast zeitgleich zu den Zeitpunkten t₁, t₂ versucht hatten, ihre jeweiligen Datentelegramme 35', 35" über das Bussystem 33 zu übermitteln, konnte aufgrund der unterschiedlichen Karenzzeiten T₁, T₂ sichergestellt werden, dass das dringlichere Datentelegramm 35' zuerst abgeschickt wurde und somit bei der Datenübertragung eine höhere Priorisierung vor dem weniger dringlichen Datentelegramm 35" genossen hat.

Bei dem in Fig. 3 dargestellten zweiten Szenario versucht ein erstes Feldgerät 17' erst zu einem Zeitpunkt t₁, nachdem die Datenübertragung eines vorangegangenen Datentelegramms 35 zum Zeitpunkt tₑ₀ beendet wurde, ein dringliches Datentelegramm 35' über das Bussystem 33 auszugeben (siehe Zeitdiagramm (ii)). Bereits zu einem früheren Zeitpunkt t₂, insbesondere vor Beendigung der Datenübertragung des vorangehenden Datentelegramms 35 zum Zeitpunkt tₑ₀, versucht ein anderes Feldgerät 17" ein weniger dringliches Datenpaket 35" zu übertragen, erkennt dabei aber, dass aktuell bereits eine Datenübertragung über das Bussystem 33 stattfindet und wartet somit zunächst dessen Ende ab. Ab diesem Ende tₑ₀ wartet es ergänzend seine relativ lange Karenzzeit T₂ ab (siehe Zeitdiagramm (iii)). Das erst zum späteren Zeitpunkt t₁ getriggerte erste Feldgerät wartet rückblickend zu dem Ende tₑ₀ ebenfalls seine Karenzzeit T₁ ab, welche jedoch deutlich kürzer ist als die Karenzzeit T₂ des weniger dringlichen Datenpakets 35". Somit beginnt das erste Feldgerät 17' bereits zum Zeitpunkt tₐ₁ damit, sein dringliches Datentelegramm 35' abzusetzen. Nachdem dessen Datenübertragung zum Zeitpunkt tₑ₁ abgeschlossen ist, wartet das zweite Feldgerät 17" erneut seine Karenzzeit T₂ ab, bevor es dann zum Zeitpunkt tₐ₂ beginnt, sein weniger dringliches Datentelegramm 35" zu übertragen. Das Senden des Datentelegramms 35" endet zu einem Zeitpunkt tₑ₂.

Auch in diesem zweiten Szenario kann durch Einhalten dringlichkeitsabhängiger Karenzzeiten T₁, T₂ eine Priorisierung zwischen den unterschiedlich dringlichen Datentelegrammen 35', 35" erfolgen.

Es ist auch möglich, dass eine gesamte Karenzzeit für das Senden des Datentelegramms 35' durch das erstes Feldgerät 17' aus zwei Teilen besteht. Der erste Teil würde in diesem Fall aus der Zeitspanne zwischen dem Ende tₑ₀ der Datenübertragung des vorangehenden Datentelegramms 35 und dem Zeitpunkt t₁, an dem das erste Feldgerät 17' ein dringliches Datentelegramm 35' über das Bussystem 33 auszugeben möchte, bestehen. Der zweite Teil würde aus der Karenzzeit T₁ gemäss Fig. 3 bestehen. Das Datentelegramm 35' würde damit im Vergleich mit der Darstellung in Fig. 3 um den beschriebenen ersten Teil der Karenzzeit später gesendet werden.

Das hierin vorgeschlagene Priorisierungsverfahren mithilfe von dringlichkeitsabhängigen Karenzzeiten T₁, T₂ kann mit verhältnismässig günstiger Hardware auskommen und kann somit in einer Personentransportanlage 1, insbesondere einer Aufzuganlage 2, einfach und kostengünstig implementiert werden.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Der Schutzumfang der Erfindung wird durch die beigefügten Ansprüche bestimmt. Bezugszeichen in den Ansprüchen sind nicht als Einschränkung anzusehen.

## Patentansprüche

1. Personentransportanlage (1) aufweisend:
eine zentrale Steuereinheit (13) zum Steuern von Funktionen der Personentransportanlage (1);
eine Mehrzahl von Feldgeräten (17), welche innerhalb der Personentransportanlage (1) räumlich verteilt angeordnet sind,
ein Bussystem (33) zur Datenübertragung zwischen der zentralen Steuereinheit (13) und den Feldgeräten (17),
wobei jedes Feldgerät (17) dazu eingerichtet ist, Daten über das Bussystem (33) an die zentrale Steuereinheit (13) und/oder an ein anderes Feldgerät (17) auszugeben und/oder wobei die zentrale Steuereinheit (13) dazu eingerichtet ist, Daten über das Bussystem (33) an eines der Feldgeräte (17) auszugeben und
wobei die zentrale Steuereinheit (13) und/oder die Feldgeräte (17) dazu eingerichtet sind, verschiedene Typen von Datentelegrammen (35, 35', 35") über das Bussystem (33) auszugeben, welche sich hinsichtlich ihrer Dringlichkeit unterscheiden,
**dadurch gekennzeichnet, dass** die zentrale Steuereinheit (13) und/oder die Feldgeräte (17) dazu eingerichtet sind, eine aktuelle Datenübertragung über das Bussystem (33) sowie ein Beenden einer Datenübertragung über das Bussystem (33) zu erkennen,
und
wobei die zentrale Steuereinheit (13) und/oder die Feldgeräte (17) dazu eingerichtet sind,
eigene Datentelegramme (35, 35', 35") erst über das Bussystem (33) auszugeben, wenn keine aktuelle Datenübertragung über das Bussystem (33) stattfindet und nachdem eine Karenzzeit (T₁, T₂) seit Beenden einer vorangegangenen Datenübertragung über das Bussystem (33) verstrichen ist,
wobei jedem Typ von Datentelegramm (35, 35', 35") eine individuelle Karenzzeit (T₁, T₂) abhängig von der jeweiligen Dringlichkeit zugeordnet ist,
wobei die zentrale Steuereinheit (13) und/oder die Feldgeräte (17) dazu eingerichtet sind, die einem Typ von Datentelegramm (35, 35', 35") zugeordnete Dringlichkeit abhängig von aktuellen Bedingungen zu variieren.

2. Personentransportanlage nach Anspruch 1, wobei die zentrale Steuereinheit (13) und/oder die Feldgeräte (17) dazu eingerichtet sind, die einem Datentelegramm (35, 35', 35") zugeordnete Dringlichkeit temporär zu erhöhen, wenn mehrere Versuche das Datentelegramm (35, 35', 35") zu senden, gescheitert sind.

3. Personentransportanlage nach Anspruch 1 oder 2, wobei das Bussystem (33), die zentrale Steuereinheit (13) und die Feldgeräte (17) dazu ausgelegt sind, Daten mit einer bestimmten Datenübertragungsrate zu kommunizieren und wobei sich die individuellen Karenzzeiten (T₁, T₂) von Typen von Datentelegrammen (35, 35', 35") unterschiedlicher Dringlichkeiten um mindestens die Dauer unterscheiden, die bei der bestimmten Datenübertragungsrate zur Übertragung einer einzelnen Dateneinheit benötigt wird, insbesondere wobei sich die verschiedenen individuellen Karenzzeiten (T₁, T₂) um mindestens die vierfache Dauer unterscheiden, die bei der bestimmten Datenübertragungsrate zur Übertragung einer einzelnen Dateneinheit benötigt wird.

4. Personentransportanlage nach einem der vorangehenden Ansprüche, wobei das Bussystem (33), die zentrale Steuereinheit (13) und die Feldgeräte (17) dazu ausgelegt sind, Daten mit einer Datenübertragungsrate von 9600 Baud zu kommunizieren und wobei sich die verschiedenen individuellen Karenzzeiten (T₁, T₂) um wenigstens 1 ms, vorzugsweise wenigstens 2 ms, unterscheiden.

5. Personentransportanlage nach einem der vorangehenden Ansprüche, wobei mehrere der Feldgeräte (17) bezüglich ihrer Hardware gleich ausgebildet sind und jeweils dazu ausgelegt sind, verschiedene Typen von Datentelegrammen (35, 35', 35") über das Bussystem (33) auszugeben, welche sich hinsichtlich ihrer Dringlichkeit unterscheiden.

6. Personentransportanlage nach einem der vorangehenden Ansprüche, wobei die Feldgeräte (17) dazu ausgelegt sind, zumindest folgende Typen von Datentelegrammen (35, 35', 35") auszugeben:
- Spontanmeldungen, welche eine Zustandsänderung bei einem Feldgerät (17) angeben und welche eine hohe Dringlichkeit aufweisen,
- sporadische Prüfmeldungen, welche ein Ergebnis einer komplexen Überprüfung einer Funktionsfähigkeit eines Feldgeräts (17) angeben und welche eine mittlere Dringlichkeit aufweisen,
- zyklische Prüfmeldungen, welche ein Ergebnis einer einfachen Überprüfung einer Funktionsfähigkeit eines Feldgeräts (17) angeben und welche eine niedrige Dringlichkeit aufweisen.

7. Personentransportanlage nach einem der vorangehenden Ansprüche, wobei die zentrale Steuereinheit (13) und/oder die Feldgeräte (17) dazu eingerichtet sind, Datentelegramme (35') eines Typs hoher Dringlichkeit seltener über das Bussystem (33) auszugeben als Datentelegramme (35") eines Typs niedriger Dringlichkeit.

8. Personentransportanlage nach einem der vorangehenden Ansprüche, wobei die zentrale Steuereinheit (13), die Feldgeräte (17) und/oder das Bussystem (33) dazu eingerichtet sind, beim Versuch eines Ausgebens eines Datentelegramms (35, 35', 35") zu überprüfen, ob zeitgleich von einem anderen Feldgerät (17) bzw. von der Steuereinheit (13) versucht wird, ein Datentelegramm (35, 35', 35") über das Bussystem (33) auszugeben, und in einem solchen Fall anhand von Priorisierungskriterien zu entscheiden, welches der Datentelegramme (35, 35', 35") über das Bussystem (33) ausgegeben wird.

9. Personentransportanlage nach einem der vorangehenden Ansprüche, wobei jedes Feldgerät (17) dazu eingerichtet ist, von einem Sensor erzeugte Sensordaten über das Bussystem (33) an die zentrale Steuereinheit (13) auszugeben und/oder wobei die zentrale Steuereinheit (13) dazu eingerichtet ist, von einem Aktor umzusetzende Steuerdaten über das Bussystem (33) an eines der Feldgeräte (17) auszugeben.

10. Verfahren zur Übertragung von Datentelegrammen (35, 35', 35") über ein Bussystem (33) zwischen einer zentralen Steuereinheit (13) und einem von mehreren Feldgeräten (17) innerhalb einer Personentransportanlage (1), wobei die zentrale Steuereinheit und/oder die Feldgeräte dazu eingerichtet sind, verschiedene Typen von Datentelegrammen (35, 35', 35") über das Bussystem (33) auszugeben, welche sich hinsichtlich ihrer Dringlichkeit unterscheiden,
**dadurch gekennzeichnet, dass** das Verfahren aufweist:
Erkennen, ob eine aktuelle Datenübertragung über das Bussystem (33) stattfindet, sowie wann eine vorangegangene Datenübertragung über das Bussystem beendet wurde, Ausgeben eines Datentelegramms (35, 35', 35") eines bestimmten Typs über das Bussystem (33) erst, wenn keine aktuelle Datenübertragung über das Bussystem (33) stattfindet und nachdem eine Karenzzeit (T₁, T₂) seit Beenden einer vorangegangenen Datenübertragung über das Bussystem (33) verstrichen ist,
wobei jedem Typ (35, 35', 35") von Datentelegramm eine individuelle Karenzzeit (T₁, T₂) abhängig von der jeweiligen Dringlichkeit zugeordnet ist und die einem Typ von Datentelegramm (35, 35', 35") zugeordnete Dringlichkeit abhängig von aktuellen Bedingungen variiert werden kann.

11. Verfahren nach Anspruch 10, wobei die einem Datentelegramm (35, 35', 35") zugeordnete Dringlichkeit temporär erhöht wird, wenn mehrere Versuche das Datentelegramm (35, 35', 35") zu senden, gescheitert sind.

12. Verfahren nach Anspruch 10 oder 11, wobei eine Datenkommunikation über das Bussystem (33) mit einer bestimmten Datenübertragungsrate erfolgt und wobei sich die individuellen Karenzzeiten (T₁, T₂) von Typen von Datentelegrammen (35, 35', 35") unterschiedlicher Dringlichkeiten um mindestens die Dauer unterscheiden, die bei der bestimmten Datenübertragungsrate zur Übertragung einer einzelnen Dateneinheit benötigt wird, insbesondere wobei sich die verschiedenen individuelle Karenzzeiten um mindestens die vierfache Dauer unterscheiden, die bei der bestimmten Datenübertragungsrate zur Übertragung einer einzelnen Dateneinheit benötigt wird.

13. Computerprogrammprodukt, aufweisend von einem Computer lesbare Anweisungen, welchen den Computer dazu anleiten, ein Verfahren gemäss einem der Ansprüche 10, 11 und 12 auszuführen oder zu steuern.

14. Computerlesbares Medium, aufweisend ein darauf gespeichertes Computerprogrammprodukt gemäss Anspruch 13.

## Claims

1. Passenger transport system (1) having:
a central control unit (13) for controlling functions of the passenger transport system (1);
a plurality of field devices (17) which are spatially distributed within the passenger transport system (1),
a bus system (33) for transmitting data between the central control unit (13) and the field devices (17),
each field device (17) being configured to output data via the bus system (33) to the central control unit (13) and/or to a different field device (17), and/or
the central control unit (13) being configured to output data via the bus system (33) to one of the field devices (17), and
the central control unit (13) and/or field devices (17) being configured to output different types of data telegrams (35, 35', 35") via the bus system (33), which data telegrams differ with respect to their urgency,
**characterized in that** the central control unit (13) and/or the field devices (17) are configured to detect a current data transmission via the bus system (33) and a conclusion of a data transmission via the bus system (33),
and
the central control unit (13) and/or the field devices (17) being configured to output their own data telegrams (35, 35', 35") via the bus system (33) only when no current data transmission is occurring via the bus system (33) and after a waiting period (T₁, T₂) has elapsed since the conclusion of a previous data transmission via the bus system (33), an individual waiting period (T₁, T₂) being assigned to each type of data telegram (35, 35', 35") on the basis of the particular urgency,
the central control unit (13) and/or the field devices (17) being configured to vary, on the basis of current conditions, the urgency assigned to a type of data telegram (35, 35', 35").

2. Passenger transport system according to claim 1, wherein the central control unit (13) and/or the field devices (17) are configured to temporarily increase the urgency assigned to a data telegram (35, 35', 35") if several attempts to transmit the data telegram (35, 35', 35") have failed.

3. Passenger transport system according to either claim 1 or claim 2, wherein the bus system (33), the central control unit (13), and the field devices (17) are designed to communicate data at a specific data transfer rate, and wherein the individual waiting periods (T₁, T₂) of types of data telegrams (35, 35', 35") having different degrees of urgency differ by at least the duration required for transmitting one individual data unit at the specific data transfer rate, in particular wherein the different individual waiting periods (T₁, T₂) differ by at least four times the duration required for transmitting one individual data unit at the specific data transfer rate.

4. Passenger transport system according to one of the previous claims, wherein the bus system (33), the central control unit (13), and the field devices (17) are designed to communicate data at a data transfer rate of 9600 baud, and wherein the different individual waiting periods (T₁, T₂) differ by at least 1 ms, preferably at least 2 ms.

5. Passenger transport system according to one of the previous claims, wherein a plurality of field devices (17) are, with respect to their hardware, identical and are each designed to output via the bus system (33) different types of data telegrams (35, 35', 35") which differ with respect to their urgency.

6. Passenger transport system according to one of the previous claims, wherein the field devices (17) are designed to output at least the following types of data telegrams (35, 35', 35"):
- instant messages which indicate a change of state at a field device (17) and which have a high urgency,
- sporadic test messages which indicate a result of a complex review of the functionality of a field device (17) and which have a medium urgency,
- cyclic test messages which indicate a result of a simple review of the functionality of a field device (17) and which have a low urgency.

7. Passenger transport system according to one of the previous claims, wherein the central control unit (13) and/or the field devices (17) are configured to output data telegrams (35') of a type with high urgency less frequently via the bus system (33) than data telegrams (35") of a type with low urgency.

8. Passenger transport system according to one of the previous claims, wherein the central control unit (13), the field devices (17) and/or the bus system (33) are configured to verify, in case of an attempt to output a data telegram (35, 35', 35"), whether a different field device (17) or the control unit (13) is simultaneously attempting to output a data telegram (35, 35', 35") via the bus system (33) and in such case decide by means of prioritization criteria which of the data telegrams (35, 35', 35") will be output via the bus system (33).

9. Passenger transport system according to one of the previous claims, wherein each field device (17) is configured to output sensor data generated by a sensor to the central control unit (13) via the bus system (33), and/or wherein the central control unit (13) is configured to output control data to be implemented by an actuator via the bus system (33) to one of the field devices (17).

10. Method for transmitting data telegrams (35, 35', 35") via a bus system (33) between a central control unit (13) and one of a plurality of field devices (17) within a passenger transport system (1), the central control unit and/or the field devices being configured to output different types of data telegrams (35, 35', 35") via the bus system (33), which data telegrams differ with respect to their urgency,
**characterized in that** the method comprises:
detecting whether a current data transmission via the bus system (33) takes place, and when a previous data transmission via the bus system was concluded,
outputting a data telegram (35, 35', 35") of a specific type via the bus system (33) only if no current data transmission via the bus system (33) takes place and after a waiting period (T₁, T₂) has elapsed since the conclusion of a previous data transmission via the bus system (33),
an individual waiting period (T₁, T₂) being assigned to each type (35, 35', 35") of data telegram on the basis of the particular urgency, and it being possible to vary, on the basis of current conditions, the urgency assigned to a type of data telegram (35, 35', 35").

11. Method according to claim 10, wherein the urgency assigned to a data telegram (35, 35', 35") is temporarily increased if several attempts to transmit the data telegram (35, 35', 35") have failed.

12. Method according to either claim 10 or claim 11, wherein a data communication via the bus system (33) takes place at a specific data transfer rate, and wherein the individual waiting periods (T₁, T₂) of types of data telegrams (35, 35', 35") having different degrees of urgency differ at least by the duration required for transmitting an individual data unit at the specific data transfer rate, in particular wherein the different individual waiting periods differ by at least four times the duration required for transmitting one individual data unit at the specific data transfer rate.

13. Computer program product, having commands readable by a computer, which instruct the computer to execute or to control a method according to one of the claims 10, 11 und 12.

14. Computer-readable medium, having a stored computer program product according to claim 13.

## Revendications

1. Installation de transport de personnes (1), comprenant :
une unité centrale de commande (13) permettant de commander les fonctions de l'installation de transport de personnes (1),
une pluralité de dispositifs de terrain (17) qui sont répartis dans l'espace à l'intérieur de l'installation de transport de personnes (1),
un système de bus (33) pour la transmission de données entre l'unité centrale de commande (13) et les dispositifs de terrain (17),
chaque dispositif de terrain (17) étant conçu pour émettre des données par l'intermédiaire du système de bus (33) vers l'unité centrale de commande (13) et/ou vers un autre dispositif de terrain (17), et/ou l'unité de centrale commande (13) étant conçue pour émettre des données par l'intermédiaire du système de bus (33) vers l'un des dispositifs de terrain (17), et
l'unité centrale de commande (13) et/ou les dispositifs de terrain (17) étant conçus pour émettre différents types de datagrammes (35, 35', 35") par l'intermédiaire du système de bus (33), lesquels diffèrent par leur caractère urgent,
**caractérisée en ce que** l'unité centrale de commande (13) et/ou les dispositifs de terrain (17) sont conçus pour identifier une transmission de données actuelle par l'intermédiaire du système de bus (33) ainsi que la fin d'une transmission de données par l'intermédiaire du système de bus (33),
et
l'unité centrale de commande (13) et/ou les dispositifs de terrain (17) étant conçus pour n'émettre des datagrammes distincts (35, 35', 35") par l'intermédiaire du système de bus (33), que lorsqu'aucune transmission de données actuelle n'a lieu par l'intermédiaire du système de bus (33), et qu'une fois un délai de carence (T₁, T₂) écoulé depuis la fin d'une transmission de données précédente par l'intermédiaire du système de bus (33),
un délai de carence individuel (T₁, T₂) étant associé à chaque type de datagramme (35, 35', 35") en fonction du caractère urgent respectif,
l'unité centrale de commande (13) et/ou les dispositifs de terrain (17) étant conçus pour modifier le caractère urgent associé à un type de datagramme (35, 35', 35") en fonction des conditions actuelles.

2. Installation de transport de personnes selon la revendication 1, dans laquelle l'unité centrale de commande (13) et/ou les dispositifs de terrain (17) sont conçus pour augmenter temporairement le caractère urgent associé à un datagramme (35, 35', 35") lorsque plusieurs tentatives d'envoi du datagramme (35, 35', 35") ont échoué.

3. Installation de transport de personnes selon les revendications 1 ou 2, dans laquelle le système de bus (33), l'unité centrale de commande (13) et les dispositifs de terrain (17) sont conçus pour communiquer des données à un débit de transmission de données spécifique, et dans laquelle les délais de carence individuels (T₁, T₂) des types de datagrammes (35, 35', 35") de caractères urgents différents diffèrent, au moins en ce qui concerne la durée, laquelle durée est nécessaire pour la transmission d'une seule unité de données au débit de transmission de données déterminé, en particulier dans laquelle les différents délais de carence individuels (T₁, T₂) diffèrent d'au moins quatre fois la durée nécessaire pour la transmission d'une seule unité de données au débit de transmission de données déterminé.

4. Installation de transport de personnes selon l'une des revendications précédentes, dans laquelle le système de bus (33), l'unité centrale de commande (13) et les dispositifs de terrain (17) sont conçus pour communiquer des données à un débit de transmission de données de 9600 bauds, et dans laquelle les différents délais de carence individuels (T₁, T₂) diffèrent d'au moins 1 ms, de préférence d'au moins 2 ms.

5. Installation de transport de personnes selon l'une des revendications précédentes, dans laquelle plusieurs des dispositifs de terrain (17) sont de configuration matérielle identique et sont chacun conçus pour émettre différents types de datagrammes (35, 35', 35") par l'intermédiaire du système de bus (33), lesquels types de datagrammes diffèrent par leur caractère urgent.

6. Installation de transport de personnes selon l'une des revendications précédentes, dans laquelle les dispositifs de terrain (17) sont conçus pour émettre au moins les types de datagrammes (35, 35', 35") suivants :
- notifications spontanées qui indiquent un changement d'état dans un dispositif de terrain (17), et qui présentent un caractère urgent élevé,
- messages d'essai sporadiques qui indiquent un résultat d'un contrôle complexe du fonctionnement d'un dispositif de terrain (17), et qui présentent un caractère urgent moyen,
- messages d'essai cycliques qui indiquent un résultat d'un contrôle simple du fonctionnement d'un dispositif de terrain (17), et qui présentent un caractère urgent faible,

7. Installation de transport de personnes selon l'une des revendications précédentes, dans laquelle l'unité centrale de commande (13) et/ou les dispositifs de terrain (17) sont conçus pour émettre, par l'intermédiaire du système de bus (33), des datagrammes (35') d'un type de caractère urgent élevé, moins fréquemment que les datagrammes (35") d'un type de caractère urgent faible.

8. Installation de transport de personnes selon l'une des revendications précédentes, dans laquelle l'unité centrale de commande (13), les dispositifs de terrain (17) et/ou le système de bus (33) sont conçus pour vérifier, lors d'une tentative d'émission d'un datagramme (35, 35', 35"), si un autre dispositif de terrain (17) ou l'unité de commande (13) tente simultanément d'émettre un datagramme (35, 35', 35") par l'intermédiaire du système de bus (33), et si tel est le cas, sur la base de critères de priorité, pour décider lequel des datagrammes (35, 35', 35") sera émis par l'intermédiaire du système de bus (33).

9. Installation de transport de personnes selon l'une des revendications précédentes, dans laquelle chaque dispositif de terrain (17) est conçu pour émettre, par l'intermédiaire du système de bus (33), des données de capteur générées par un capteur vers l'unité centrale de commande (13), et/ou dans laquelle l'unité centrale de commande (13) est conçue pour émettre, par l'intermédiaire du système de bus (33), des données de commande à mettre en œuvre par un actionneur vers l'un des dispositifs de terrain (17).

10. Procédé de transmission de datagrammes (35, 35', 35") par l'intermédiaire d'un système de bus (33) entre une unité centrale de commande (13) et l'un de la pluralité de dispositifs de terrain (17) dans une installation de transport de personnes (1), l'unité centrale de commande et/ou les dispositifs de terrain étant conçus pour émettre différents types de datagrammes (35, 35', 35") par l'intermédiaire du système de bus (33), lesquels diffèrent par leur caractère urgent,
**caractérisé en ce que** le procédé consiste à :
détecter si une transmission de données actuelle a lieu par l'intermédiaire du système de bus (33), et lorsqu'une transmission de données précédente par l'intermédiaire du système de bus a pris fin, n'émettre un télégramme de données (35, 35', 35") d'un type spécifique par l'intermédiaire du système de bus (33), que lorsqu'aucune transmission de données actuelle n'a lieu par l'intermédiaire du système de bus (33), et qu'une fois un délai de carence (T₁, T₂) écoulé depuis la fin d'une transmission de données précédente par l'intermédiaire du système de bus (33),
un délai de carence individuel (T₁, T₂) étant associé à chaque type de datagramme (35, 35', 35") en fonction du caractère urgent, et le caractère urgent associé à un type de datagramme (35, 35', 35") pouvant être modifié en fonction des conditions actuelles.

11. Procédé selon la revendication 10, dans lequel le caractère urgent associé à un datagramme (35, 35', 35") est temporairement augmenté si plusieurs tentatives d'envoi du datagramme (35, 35', 35") ont échoué.

12. Procédé selon la revendication 10 ou 11, dans lequel la communication de données par l'intermédiaire du système de bus (33) a lieu à un débit de transmission de données spécifique, et dans lequel les délais de carence individuels (T₁, T₂) des types de datagrammes (35, 35', 35") de caractères urgents différents diffèrent, au moins en ce qui concerne la durée, laquelle durée est nécessaire pour la transmission d'une seule unité de données au débit de transmission de données déterminé, en particulier dans laquelle les différents délais de carence individuels diffèrent d'au moins quatre fois la durée nécessaire pour la transmission d'une seule unité de données au débit de transmission de données déterminé.

13. Produit de programme informatique, comprenant des instructions lisibles par un ordinateur, lesquelles commandent à l'ordinateur d'exécuter ou de commander un procédé selon l'une des revendications 10, 11 et 12.

14. Support lisible par ordinateur, sur lequel est stocké un produit de programme informatique selon la revendication 13.
